# EUROPÄISCHE PATENTSCHRIFT

(11) **EP 2 293 044 B1**
(45) Veröffentlichungstag und Bekanntmachung des Hinweises auf die Patenterteilung: **15.05.2013**
(21) Anmeldenummer: 10001561.9
(22) Anmeldetag: 16.02.2010
(51) Int. Cl.: G01N 21/47, B60S 1/08, G01N 21/94, G01N 21/958

(54) **Vorrichtung und Verfahren zur Detektion von Verunreinigungen**
Device and method for detecting impurities
Dispositif et procédé destinés à la détection d'impuretés

(30) Priorität: 07.09.2009 DE 102009040216
(43) Veröffentlichungstag der Anmeldung: 09.03.2011
(73) Patentinhaber: Pepperl + Fuchs GmbH, 68307 Mannheim (DE)
(72) Erfinder: Thien, Marcus, Singapore 610333 (SG)
(74) Vertreter: Koch Müller Patentanwaltsgesellschaft mbH

(56) Entgegenhaltungen:
- US-A- 4 960 996

## Beschreibung

Die Erfindung betrifft eine Vorrichtung zur Detektion von Verunreinigungen gemäß dem Oberbegriff des Patentanspruchs 1 und ein Verfahren zur Detektion von Verunrelnlgungen gemäß dem Oberbegriff des Patentanspruchs 10.

Aus der EP 1 813 961 A Ist eine Vorrichtung und ein Verfahren zur Detektion von Verschmutzungen von Frontscheiben bekannt. Die Vorrichtung weist eine Sendeeinheit und eine als Empfangseinheit ausgebildetes Sensorarray auf. Die Sendeeinheit sendet Beleuchtungsstrahlen mit einem strukturierten Beleuchtungsmuster aus, welche unter einem vorgegeben Winkel reflektiert und mittels Abbildungsoptik auf eine erste vorgegeben Stelle des Sensorarrays auftreffen. Bei einer Verschmutzung der Außenseite der Fensterscheibe findet eine diffuse Streuung statt, wobei ein Teil des gestreuten Lichtes von der Abbildungsoptik auf eine zweite Stelle des Sensorarrays abgebildet wird.

Des Weitere ist aus der WO 00/35725 ein weiteres Verfahren zum Detektieren und Lokalisieren von Verschmutzungen auf einer lichtdurchlässigen Schicht, insbesondere Autoscheibe, bekannt. Gemäß dem offenbarten Verfahren wird mittels eines Sensorarrays die Intensltätsvertellung des an der inneren als auch an der äußeren Grenzfläche reflektierten Lichtstrahlbildes bestimmt. Hiernach wird das Lichtstrahlbild mit einem gespeicherten Referenzlichtstrahlblld einer sauberen Scheibe verglichen, um eine Verschmutzung der Inneren bzw. der äußeren Grenzfläche zu detektieren.

Aus der US 4 867 561 und der US 4 960 966 sind unter anderem ein Verfahren zur Detektion von Verschmutzungen auf einer Inneren oder einer äußeren Fensterscheibe bekannt. Hierzu wird an der inneren Grenzfläche ein erster Lichtstrahl von einer ersten Lichtquelle und an der äußeren Grenzfläche ein zweiter Lichtstrahl von einer zweiten Lichtquelle teilweise reflektiert. Die reflektierten Lichtstrahlen werden mittels eines optischen Systems auf einen Empfänger weitergeleitet. Bei einer Verschmutzung der Grenzflächen verringern sich auf Grund des erhöhten Anteils der diffusen Streuung die den Empfänger einfallenden Intensitäten.

Nachteilig ist, dass jeweils die Referenzwerte bzw. die Intensitätsverteilung des Strahlbildes abgespeichert und mittels eines Prozessors mit den tatsächlich gemessenen Werten verglichen werden müssen. Für eine vergleichende Bildauswertung zur Ermittlung einer Verschmutzung ist ein hoher Rechenaufwand notwendig ist. Des Weiteren degradieren die Lichtquellen und oder die Empfänger bzw. weisen Intensitätsschwankungen beispielsweise aufgrund von Änderungen der Temperatur und oder der anliegenden Steuerspannung auf. Ein bereits abgespeichertes Referenzbild des Strahls mit seiner Intensitätsverteilung ist hierdurch als Referenz wenig geeignet und beeinflusst die zuverlässige Ermittlung des Grades der Verschmutzung nachteilig. Des Weiteren sind derartige Vorrichtungen mit Sensorarrays sehr kostenintensiv.

Vor diesem Hintergrund besteht die erstgenante Aufgabe der Erfindung darin, eine Vorrichtung zur Detektion von Verunreinigungen und als zweitgenannte Aufgabe ein Verfahren zur Detektion von Verunreinigungen anzugeben, die jeweils die Nachteile des Standes der Technik verringern.

Die erstgenannte Aufgabe wird durch eine Vorrichtung zur Detektion von Verunreinigungen mit den Merkmalen des Patentanspruchs 1, die zweitgenante Aufgabe durch ein Verfahren zur Detektion von Verunreinigungen mit den Merkmalen des Patentanspruchs 9 gelöst. Vorteilhafte Ausgestaltungen der Erfindung sind Gegenstand von Unteransprüchen.

Gemäß dem ersten Gegenstand der Erfindung wird eine Vorrichtung zur Detektion von Verunreinigungen bereitgestellt aufweisend eine Lichtquelle, die einen Lichtstrahl aussendet, eine transparente Schicht mit einer ersten Grenzfläche und einer zweiten Grenzfläche, wobei der von der Lichtquelle ausgesendete Lichtstrahl zuerst auf die erste Grenzfläche trifft, und ein Teil eines an der zweiten Grenzfläche gestreuten Anteils des Lichtstrahls auf einen Empfänger trifft und ein Messsignal ausbildet, und hierbei die erste Grenzfläche eingerichtet ist, einen Teil des auftreffenden Lichtstrahls zu streuen, und der auf den Empfänger auftreffende Teil des an der ersten Grenzfläche gestreuten Lichtstrahls ein Referenzsignal ausbildet, und die Vorrichtung des Weiteren eingerichtet ist, aus dem Vergleich von Referenzsignal und Messsignal ein Maß für die Verunreinigung der zweiten Grenzfläche zu ermitteln. Vorzugsweise ist die transparente Schicht gemäß einer Weiterbildung wenigstens teilweise als transparente Scheibe ausgebildet.

Gemäß dem zweiten Gegenstand der Erfindung wird ein Verfahren zur Detektion von Verunreinigungen auf einer transparenten Schicht, die als transparente Scheibe ausgeführt sein kann, bereitgestellt, wobei die Schicht und oder die Scheibe eine erste Grenzfläche und eine zweite Grenzfläche aufweist, mit einer Lichtquelle, von der ein Lichtstrahl aussendet und wobei der Lichtstrahl zuerst auf die erste Grenzfläche geleitet wird, und ein Teil des an der zweiten Grenzfläche gestreuten Lichtes auf einen Empfänger geleitet und ein Messsignal erzeugt wird, wobei die erste Grenzfläche derart eingerichtet ist, dass ein Teil des auftreffenden Lichtstrahls gestreut wird und ein Teil des an der ersten Grenzfläche diffus gestreuten, Lichts auf den Empfänger geleitet und ein Referenzsignal erzeugt wird, und aus dem Vergleich von dem Referenzsignal und dem Messsignal ein Maß für die Verunreinigung der zweiten Grenzfläche gebildet wird. Es versteht sich, dass eine Verschmutzung auf der zweiten Grenzfläche zu einer Erhöhung des an der zweiten Grenzfläche gestreuten Lichtanteils führt.

Ein Vorteil der erfindungsgemäßen Vorrichtung bzw. des Verfahrens ist es, dass sich mittels der gleichzeitigen Bildung eines Referenzsignals und eines Messsignals ohne aufwändige und kostenintensive Bildauswertungen detektieren auf einfache und kostengünstige Weise Verunreinigung detektieren lassen. Des Weiteren wird eine Schwankung der Lichtintensität der Lichtquelle beispielsweise durch Änderung der Temperatur und oder infolge einer Alterung zuverlässig unterdrückt.

Gemäß einer Weiterbildung ist es zur Einstellung des Streuanteils, der vorzugsweise diffus ist, des an der ersten Grenzfläche auftreffenden Lichtstrahls die Oberfläche der ersten Grenzfläche anzurauen und oder mit einem rasterartigen oder ähnlichen Muster zu bedrucken. Hierzu lassen sich sowohl chemische als auch mechanische Verfahren oder eine Kombination von beiden Verfahren verwenden, wobei mit dem Grad der Rauhigkeit sowohl der Anteil des gestreuten Lichtes als auch dessen Verteilungsmuster einstellen lässt. Anstelle oder zusätzlich zur Bearbeitung der ersten Oberfläche zur Einstellung des Streuanteils lässt sich auch eine transparente Folie auf der ersten Grenzfläche anbringen. Mit der Folie lässt sich flexibel und kostengünstig sowohl die Art der Streuung als auch den Streuanteil einstellen.

Gemäß einer weiteren Ausführungsform ist es vorteilhaft, die optische Achse des Lichtstrahls so zu wählen, dass im Fall einer direkten Reflexion des Lichtstrahls an den Grenzflächen, der reflektierte Anteil im Wesentlichen nicht unmittelbar auf den Empfänger trifft. Hierzu wird beispielsweise ein senkrechter Einfall des Lichtstrahls auf die erste Grenzfläche bevorzugt. in Folge wird erreicht, dass im Wesentlichen nur gestreute Lichtanteile der beiden Grenzflächen auf den Empfänger geleitet werden.

Gemäß einer anderen Weiterbildung weist der Empfänger eine erste Empfangsfläche und eine zweite Empfangsfläche auf. Vorzugsweise wird das an der ersten Grenzfläche gestreute Licht und das an der zweiten Grenzfläche gestreute Licht im Wesentlichen auf unterschiedliche Empfangsflächen geleitet. Hierzu lassen sich bekannte Abbildungsvorrichtungen aus der geometrischen Optik verwenden. Als Empfänger lassen sich viele Arten von photoempfindlichen Flächen, wie beispielsweise Photodioden, Solarzellen oder photoempfindliche Widerstände, verwenden. Des Weiteren ist es Vorteilhaft ein PSD (position sensitive decive) das zwei Signalausgänge besitzt, zu verwenden. Mittels des Vergleichs der beiden Signale der beiden Empfangsflächen wird eine Verschmutzung detektiert, wobei vorzugsweise dann eine Verschmutzung detektiert wird, wenn das Messsignal größer als das Referenzsignal ist. Gemäß einer anderen Weiterbildung weist der Empfänger hierfür ein mit einem invertieren Eingang eines Operationsverstärkers verschalteten Referenzsignalausgang und ein mit einem nicht invertierenden Eingang des Operationsverstärkers verschalteten Messsignalausgang auf.

Des Weiteren ist es vorteilhaft, zwischen dem invertierenden Eingang und dem Referenzsignalausgang ein Spannungsteiler, der vorzugsweise steuerbar ist, vorzusehen, mit dem sich die Größe des Referenzeinganssignals einstellen lässt. Mittels des Spannungsteilers lassen sich auf einfach Weise in Zusammenhang mit dem invertierenden Eingang des Operationsverstärkers nahezu beliebige Schwellwerte für die Detektion einer Verschmutzung festlegen. In erster Näherung gilt, dass je größer die an dem invertierenden Eingang anliegende Referenzspannung ist, desto unempfindlicher wird die Detektion und vice versa.

In einer anderen Ausführungsform ist ein Steuergerät zur Ansteuerung der Lichtquelle und des Spannungsteilers vorgesehen, wobei das Steuergerät einen Ausgang zur Ausgabe eines Signals aufweist mit dem eine Verschmutzung und oder mit der Höhe des Signals den Grad der Verschmutzung mitgeteilt wird.

Gemäß einer bevorzugten Weiterbildung wird der Vergleich von dem Referenzsignal mit dem Messsignal von dem Steuergerät in Zeitintervallen durchgeführt und das Ergebnis des Vergleichs drahtlos oder drahtgebunden an ein Hostgerät weitergeleitet. Für eine drahtgebundene Weiterleitung bietet sich sowohl ein Eindraht oder Mehrdrahtbussystem an. Für eine drahtlosen Weiterleitung bieten sich Funkschnittstellen wie beispielsweise Bluetooth und oder GSM an.

Untersuchungen der Anmelderin haben ergeben, dass die Vorrichtung oder des Verfahrens zur Detektion von Verunreinigungen an Oberflächen von Solarkollektoren und / oder Solarzellen und / oder Fensterscheiben vorteilhaft verwenden lässt. Gemäß einer ersten Alternative wird die Vorrichtung gehäust und mit einer transparenten Schicht, die vorzugsweise aus einem transparenten Kunststoff, höchst vorzugsweise aus Glas besteht, verschlossen. Hiernach lässt sich die Vorrichtung in der Nähe oder unmittelbar in Verbindung zu dem überwachenden Objekt anbringen. Durch das Gehäuse lassen sich insbesondere die optisch empfindlichen Teile der Vorrichtung von Umwelteinflüssen zuverlässig schützen. Hierbei lässt sich die Verschlussschicht des Gehäuses entweder unmittelbar oder beabstandet zu der Schicht, deren Oberfläche überwacht werden soll, anordnen. Bei dem entstehenden System aus wenigstens zweit separaten Schichten ist es vorteilhaft, wenn die erste Grenzfläche für die Ausbildung des gestreuten, vorzugsweise diffus gestreuten, Lichtanteils entweder an der ersten der Lichtquelle zugewandten Oberfläche der Verschlussschicht oder an der der Verschlussschicht zugewandten Oberfläche von der zweiten der zu überwachenden Schicht ausgebildet wird. Demgemäß lassen sich auch in einem Aufbau von mehreren wenigstens teilweise transparenten Schichten die erste Oberfläche zur Ausbildung des ersten Streulichtanteils an wenigstens einer der Oberflächen, deren Normalenvektor entgegen der Richtung des von der Lichtquelle ausgesendeten Lichtstrahls zeigt, ausbilden.

Gemäß einer weiteren Ausführungsform wird bei einer vorzugsweisen gehäusten Ausführungsform als transparente Schicht unmittelbar die zu überwachende Schicht verwendet, in dem eine zumindest in Richtung des auszusenden Lichtstrahls offene Vorrichtung die Vorrichtung unmittelbar an die zu überwachende Schicht angeflanscht wird. Hierbei ist es vorteilhaft, wenn an einer ersten Grenzfläche der zu überwachenden Schicht, das ist gemäß der vorliegenden Ausführungsform diejenige Grenzfläche auf welche der von der Lichtquelle ausgesendete Lichtstrahl zuerst auftrifft, wenigstens ein Teil des auftreffenden Lichtstrahls diffus reflektiert wird. Vorteilhaft lässt sich eine diffuse Reflektion an der ersten Grenzfläche mittels einer aufzubringenden Streufolie erreichen.

Gemäß einer anderen Ausführungsform wird die zum Betreib der Vorrichtung und oder des Steuergerät durch die Energie einer Solarzelle versorgt. Insbesondere bei einem Einsatz zur Überwachung einer Vielzahl von Solarmodulen ist es bevorzugt, mit der erfindungsgemäßen Detektlonseinrichtung im Falle einer Verschmutzung von dem Steuergerät ein entsprechendes Signal mittels einer Open-Kollektor Schaltung zur Verfügung zu stellen.

Die Erfindung wird nachfolgend unter Bezugnahme auf die Zeichnungen näher erläutert. Hierbei werden gleichartige Teile mit identischen Bezeichnungen beschriftet. Darin zeigen die:
- Figur 1: eine erste Ausführungsform mit einer sauberen zweiten Grenzfläche,
- Figur 2: eine Ausführungsform gemäß der Abbildung der Fig. 1 jedoch mit einer verunreinigten zweiten Grenzfläche,
- Figur 3: eine Ausführungsform gemäß der Abbildung der Fig. 2 mit ei- ner schematischen Darstellung der Auswerteelektronik,
- Figur 4: schematisierte Darstellung einer Verwendung der erfindungs- gemäßen Vorrichtung bei einer Vielzahl von Solarmodulen,
- Figur 5: eine gehäuste Ausführungsform der erfindungsgemäßen Vor- richtung.

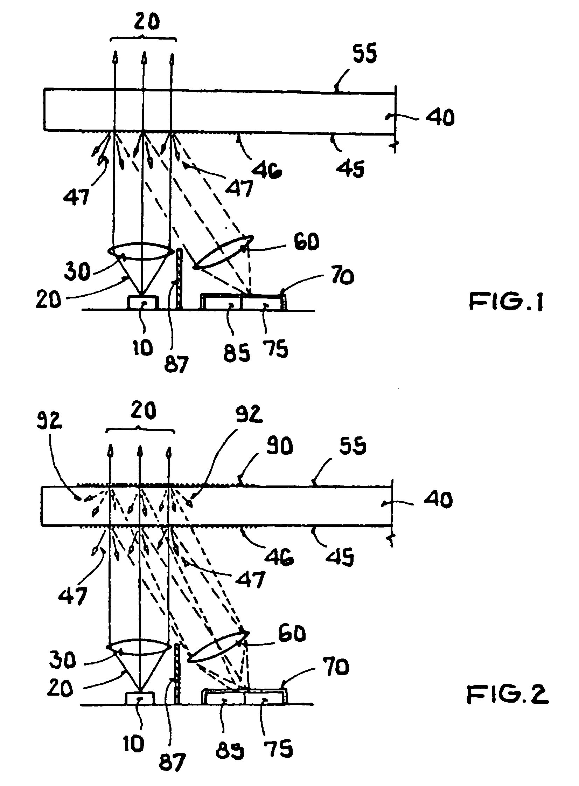

Die Abbildung der Figur 1 zeigt eine erste Ausführungsform der erfindungsgemäßen Vorrichtung. Eine Lichtquelle 10 sendet einen Lichtstrahl 20, der von einer Linse 30 gebündelt wird, in senkrechter Richtung auf eine Schicht 40, die vorzugsweise aus Glas ausgebildet ist, und eine erste Grenzfläche 45 und eine zweite Grenzfläche 55 aufweist, aus. Die Grenzfläche 45 weist an ihre Oberfläche eine Rauigkeit 46 auf. Der Lichtstrahl trifft senkrecht auf die erste Grenzfläche 40 auf. Durch die Rauigkeit 46 wird ein diffus gestreuter Anteil 47 ausgebildet. Der verbleibende Lichtstrahl 20 tritt, aufgrund des senkrechten Einfalls auf die zweite Grenzfläche 55, nunmehr ungehindert aus der Schicht 40 aus. Ein Teil des gestreuten Anteils 47 wird von einer Linse 60 gesammelt und im Wesentlichen auf einen Empfänger 70, der einen ersten Empfangsbereich 75 und einen zweiten Empfangsbereich 85 aufweist, geleitet. Vorzugsweise bildet die Linse 60 den gestreuten Anteil 47 auf den ersten Empfangsbereich 75 ab. Zum Abschatten der Lichtquelle 10 gegenüber dem Empfänger 70 ist eine Blende 87 vorgesehen.

Die Abbildung der Figur 2 zeigt in einer Weiterbildung die erfindungsgemäße Vorrichtung der Figur 1 nunmehr mit einer Verunreinigung 90 auf der zweiten Grenzfläche 55 der Schicht 40. Im Folgenden werden nur die Unterscheide zu der Abbildung der Figur 1 erläutert. Der Lichtstrahl 20 bildet aufgrund der Verunreinigung 90 einen gestreuten Anteil 92 aus, der wenigstens teilweise entgegen der Einfallsrichtung des Strahles gestreut wird. Ein Teil des gestreuten Anteils 92 wird von der Linse 60 gesammelt und vorzugsweise auf die zweite Empfangsfläche 85 des Empfängers 70 geleitet.

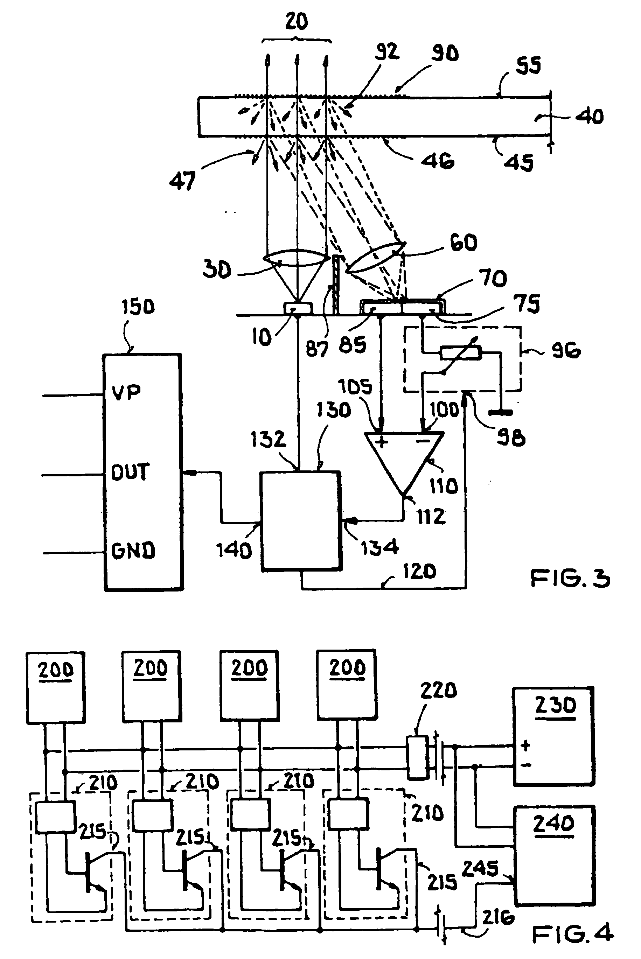

In der Abbildung der Figur 3 ist die Ausführungsform dargestellt mit den Zeichnungsunterlagen der Figur 2 mit einer Auswerteelektronik verschaltet. Im Folgenden werden nur die Unterschiede in Zusammenhang mit der Figur 2 gemachten Erläuterungen angeführt. Die erste Empfangsfläche 75 ist über einem Span- nungsteiler 96, der mit Masse verbunden ist, mit einem invertierenden Eingang 100 eines Operationsverstärkers 110 verschaltet, während die zweite Empfangsfläche 85 ist mit einem nicht- invertierenden Eingang 105 des Operationsverstärkers 110 verschaltet ist. Der Spannungsteiler 96 weist einen Steuereingang 98 auf. Der Steuereingang 98 ist mit einem Ausgang 120 eines Steuergerätes 130 verschaltet. Das Steuergerät 130 weist einen Ausgang 132, der mit der Lichtquelle 10, und einen Eingang 134 der mit einem Ausgang 112 des Operationsverstärkers 100 verschaltet ist, auf. Des Weiteren weist das Steuergerät 130 einen Ausgang 140 auf, der mit einem Interfacemodul 150 verschaltet ist. Das Interfacemodul 150 ist als Dreldrahtbus mit den Anschlüssen VP, OUT und GND ausgebildet.

Nachfolgend wird nun die Funktionsweise erläutert. Wird vom dem Steuergerät 130 die Lichtquelle 10 angesteuert, sendet die Lichtquelle 10 einen gebündelten Lichtstrahl 20 aus. Der an der ersten Grenzfläche 45 gestreute Anteil 47 erzeugt mittels der Empfangsfläche 75 ein Referenzsignal an dem invertierenden Eingang 100 des Operationsverstärkers 110. Die Größe des an dem invertierenden Eingang 100 anliegenden Referenzsignals lässt sich von der Steuereinheit 120 mittels des steuerbaren Spannungsteilers 96 einstellen. Sofern kein Licht an der zweiten Grenzfläche gestreut wird, ist das Ausgangssignal an dem Ausgang 112 des Operationsverstärkers 110 negativ, sofern das Referenzsignal positiv ausgebildet ist. Mit der Höhe der Verschmutzung auf der zweiten Grenzfläche 55 steigt die Intensität des auf die zweite Empfangsfläche 85 auftreffenden Streulichts und infolgedessen das am nicht-invertierenden Eingang 105 anliegende Messsignal an. Übersteigt nun das Messsignal das Referenzsignal wird das Ausgangssignal am Ausgang 112 des Operationsverstärkers 110 positiv. Mittels des Steuergerätes 130 lässt sich die Schwelle an der ein Vorzeichenwechsel des Ausgangsignals am Ausgang 112 stattfindet und hierdurch die Empfindlichkeit der gesamten Vorrichtung hinsichtlich einer Detektion von Verunreinigungen durch eine Veränderung des Spannungsteileabgriffs des Spannungsteilers 96 in weiten Bereichen einstellen.

In einer alternativen Ausführungsform wird als Maß für die Verschmutzung nicht die Größe des Ausgangssignals des Operationsverstärkers gemessen, sondern die Größe des Referenzsignals wird so eingestellt, dass das Ausgangssignals des Operationsverstärkers im Wesentlichen immer gleich 'null' ist. Hierzu wird die Höhe des Referenzsignals auf die Höhe des Messsignals eingeregelt. Ein eingestellter Wert für die Verstärkung bzw. Höhe des Referenzsignals wird als Maß der Verschmutzung verwendet. In einer weiteren Ausgestaltung lässt sich anstelle der Verstärkung des Referenzsignals auch die Verstärkung des Messsignals verändern.

Ein Vorteil der Vorrichtung ist es, dass durch die zeitgleiche Ermittlung des Referenzsignals mit dem Messsignal aus ein und derselben Lichtquelle ohne Zwlschenspeicherung eines Referenzsignals die Schwankungen in der Intensität sofort unterdrückt werden. Ferner wird nur der Streuantell des Lichtstrahls ohne aufwändige Bildauswertung erfasst und mittels eines einfachen elektronischen Vergleichs der beiden analogen Ausgangssignale der Empfangsflächen des Empfängers eine äußerst zuverlässige und kostengünstige Ermittlung von Verunreinigungen ermöglicht.

Die Abbildung der Figur 4 zeigt schematisch eine Verwendung der Erfindungsgemäßen Vorrichtung bei einer Solaranlage die aus einer Vielzahl von Einzelmodulen 200 aufgebaut ist. Jedem Einzelmodul ist eine Detektionseinheit 210 mit einer erfindungsgemäßen Vorrichtung zugeordnet. Die Module 200 sind mit einem Leitungspaar 220 zur Abführung der erzeugten Energie mit einem Wechselrichter 230 und einem Kontrollgerät 240 verschaltet. Die einzelnen Detektionseinheiten 210 sind mit zur Energieversorgung über das Leitungspaar 220 mit den Solarmodulen verschaltet und erhalten hierdurch unmittelbar die benötige Energie. Des Weiteren sind die Detektionseinheiten 210 durch einen Open-Kollektorausgang 215 mittels eines Eindrahtbusses 216 mit einem Eingang 245 des Kontrollgerätes 240 verschaltet. Das Potential des Eindrahtbusses 216 wird von dem Kontrollgerät 240 vorgegeben und liegt vorzugsweise auf "high". Wird nun von einer Detektionseinheit 210 eine Verunreinigung festgestellt, die über zulässigen Schwelle der Detektionseinheit 210 liegt wird mittels das Potential des Busses für einen bestimmte Zeitdauer auf Masse geklemmt. Aus der zeitlichen Länge des nach Masse geklemmten Potentials lässt sich beispielsweise die Lage des Moduls leicht ermitteln. Das Potential des Busses wird von den Detektionseinheiten überwacht und nur dann nach Masse geklemmt, wenn nicht eine weitere Detektionseinheit ebenfalls das Potential des Busses nach Masse klemmt.

In einer alternativen Ausführungsform lässt sich der Verschmutzungsgrad über die Dauer des 'low signal' auf dem Bus anzeigen. In einer Weiterbildung wird von der Kontrolleinheit mittels einer Mittelwertbildung ein Mittelwert aus den empfangenen Signalen als Maß für den Verschmutzungsgrad berechnet.

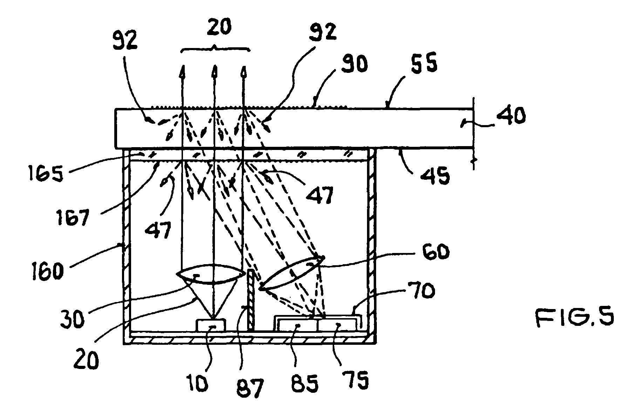

Die Abbildung der Figur 5 zeigt eine Ausführungsform der erfindungsgemäßen Vorrichtung in einem Gehäuse 160. Im Folgenden werden nur die Unterschiede in Zusammenhang mit der Figur 1 und der Figur 2 gemachten Erläuterungen angeführt. Das Gehäuse 160 ist mit einer wenigstens teilweise transparenten Scheibe 165 vorzugsweise staubdicht an der Oberseite verschlossen. Gemäß einer ersten Ausführungsform weist die Scheibe 165 an der Innenseite 167 eine vorzugsweise diffus streuende Oberfläche auf. In der dargestellten Ausführungsform ist die Scheibe 165 unmittelbar mit der Schicht 40 verbunden. Gemäß einer anderen nicht dargestellten Ausführungsform ist zwischen der Scheibe 165 und der Schicht 40 ein Abstand ausgebildet. Es sei darauf hingewiesen, dass die streuende Oberfläche anstelle oder zusätzlich zu der Innenseite 167 der Scheibe 165 auch an der ersten Grenzfläche 45 der Schicht 40 ausbilden lässt. Ein Vorteil der gehäusten Anordnung ist es, das die optischen Teile zuverlässig vor Verschmutzung geschützt sind. Gemäß einer nicht dargestellten Ausführungsform lässt sich das Gehäuse 160 auch ohne Scheibe 165 unmittelbar an die Schicht 40 anordnen. Mittels des umlaufenden Randes des Gehäuses 160 lässt sich ebenfalls eine staubdichte Anordnung erzielen.

## Patentansprüche

1. Vorrichtung zur Detektion von verunreinigungen, aufweisend
eine Lichtquelle (10), die einen Lichtstrahl (30) aussendet,
eine transparente Scheibe mit einer ersten Grenzfläche (45) und einer zweiten Grenzfläche (55), wobei
der von der Lichtquelle (10) ausgesendete Lichtstrahl (50) zuerst auf die erste Grenzfläche (45) trifft,
ein Teil eines an der zweiten Grenzfläche (55) gestreuten Anteils (92) des Lichtstrahls (20) auf einen Empfänger (70) trifft und ein Messsignal ausbildet,
**dadurch gekennzeichnet, dass**
die erste Grenzfläche (45) eingerichtet ist, einen Teil des auftreffenden Lichtstrahls diffus (20) zu streuen, und
der auf den Empfänger (70) auftreffende Teil des an der ersten Grenzfläche (45) gestreuten Lichtstrahls (20) ein Referenzsignal ausbildet, und wobei
die optische Achse des Lichtstrahls (20) so gewählt wird, dass Im Fall einer direkten Reflexion des Lichtstrahls (20) an den Grenzflächen (45, 55), der reflektierte Anteil (47, 92) nicht unmittelbar auf den Empfänger (70) trifft, und
die Vorrichtung eingerichtet ist, aus dem Vergleich von Referenzsignal und Messsignal ein Maß für die Verunreinigung (90) der zweiten Grenzfläche (55) zu ermitteln.

2. Vorrichtung nach Anspruch 1, **dadurch gekennzeichnet, dass** die Oberfläche der ersten Grenzfläche (45) angeraut ist.

3. Vorrichtung nach Anspruch 1 oder Anspruch 2, **dadurch gekennzeichnet, dass** an der ersten Grenzfläche (45) eine Streufolle angeordnet ist.

4. Vorrichtung nach Anspruch 1, **dadurch gekennzeichnet, dass** der Empfänger (70) eine erste Empfangsfläche (75) und eine zweite Empfangsfläche (85) aufweist.

5. Vorrichtung nach einem der Ansprüche 1 bis 4, **dadurch gekennzeichnet, dass** das an der ersten Grenzfläche (45) gestreute Licht und das an der zweiten Grenzfläche (55) gestreute Licht im Wesentlichen auf unterschiedliche Empfangsflächen (75, 85) auftreffen.

6. Vorrichtung nach einem der Ansprüche 1 bis 5, **dadurch gekennzeichnet, dass** der Empfänger (70) ein mit einem invertieren Eingang eines Operationsverstärkers (110) verschalteter Referenzsignalausgang und ein mit einem nicht invertierenden Eingang (105) des Operationsverstärkers (110) verschalteter Messsignalausgang aufweist.

7. Vorrichtung nach Anspruch 6, **dadurch gekennzeichnet, dass** zwischen dem invertierenden Eingang (100) und dem Referenzsignalausgang ein steuerbarer Spannungsteiler (96) vorgesehen ist.

8. Vorrichtung nach einem der Ansprüche 1 bis 7, **dadurch gekennzeichnet, dass** ein Steuergerät (130) zur Ansteuerung der Lichtquelle (20) und des Spannungstellers (96) vorgesehen ist und das Steuergerät (130) einen Ausgang (140) zur Ausgabe eines Signals für den Grad der Verschmutzung aufweist.

9. Verfahren zur Detektion von Verunreinigungen auf eine transparente Scheibe, die eine erste Grenzfläche (45) und eine zweite Grenzfläche (55) aufweist,
mit einer Lichtquelle (10), von der ein Lichtstrahl (20) aussendet und der Lichtstrahl (20) zuerst auf die erste Grenzfläche (45) geleitet wird, ein Teil des an der zweiten Grenzfläche (55) gestreuten Lichtes auf einen Empfänger (70) geleitet und ein Messsignal erzeugt wird,
**dadurch gekennzeichnet, dass**
die erste Grenzfläche (45) derart eingerichtet Ist, dass ein Teil des auftreffenden Lichtstrahls (20) diffus gestreut wird, und
wobei
die optische Achse des Lichtstrahls (20) so gewählt wird, dass Im Fall einer direkten Reflexion des Lichtstrahls (20) an den Grenzflächen (45, 55), der reflektierte Anteil (47, 92) nicht unmittelbar auf den Empfänger (70) trifft, und
ein Teil des an der ersten Grenzfläche (45) gestreuten Lichtes auf den Empfänger (70) geleitet und ein Referenzsignal erzeugt wird, und
aus dem Vergleich von dem Referenzsignal und dem Messsignal ein Maß für die Verunreinigung der zweiten Grenzfläche (55) gebildet wird.

10. Verfahren nach Anspruch 9, **dadurch gekennzeichnet, dass** im Wesentlichen nur die gestreuten Lichtanteile (47, 90) der beiden Grenzflächen (45, 55) auf den Empfänger (70) geleitet werden.

11. Verfahren nach Anspruch 9 oder Anspruch 10, **dadurch gekennzeichnet, dass** sofern das Messsignal größer als das Referenzsignal ist eine Verschmutzung erkannt wird.

12. Verfahren nach einem der Ansprüche 9 bis 11, **dadurch gekennzeichnet, dass** der Vergleich von dem Referenzsignal mit dem Messsignal von einem Steuergerät (130) In Zeitintervallen durchgeführt wird und das Ergebnis des Vergleichs drahtlos oder drahtgebunden an ein Hostgerät weitergeleitet wird.

13. Verfahren nach Anspruch 12, **dadurch gekennzeichnet, dass** das Steuergerät (130) durch die Energie einer Solarzelle versorgt wird und von dem Steuergerät (130) Im Falle einer Verschmutzung ein Signal mittels einer Open-Kollektor Schaltung zur Verfügung gestellt wird.

14. Verwendung des Vorrichtung oder des Verfahrens zur Detektion von Verunreinigungen an Oberflächen von Solarkollektoren und / oder Solarzellen und / oder Fensterscheiben.

## Claims

1. Device for detection of contaminations, comprising a light source (10), which emits a light beam (30), a transparent pane with a first boundary surface (45) and a second boundary surface (55), wherein the light beam (50) emitted by the light source (10) impinges initially on the first boundary surface (45), and a part of a proportion (92), which is dispersed at the second boundary surface (55) of the light beam (20) impinges on a receiver (70) and forms a measurement signal, **characterised in that** the first boundary surface (45) is arranged to diffusely disperse a part of the incident light beam (20) and the part, which is incident on the receiver (70), of the light beam (20) dispersed at the first boundary surface (45) forms a reference signal, and wherein the optical axis of the light beam (20) is so selected that in the case of direct reflection of the light beam (20) at the boundary surfaces (45, 55) the reflected proportion (47, 92) is not directly incident on the receiver (70), and the device is arranged to determine a measure for the contamination (90) of the second boundary surface (55) from comparison of the reference signal and measurement signal.

2. Device according to claim 1, **characterised in that** the surface of the first boundary surface (45) is roughened.

3. Device according to claim 1 or claim 2, **characterised in that** a dispersing film is arranged at the first boundary surface (45).

4. Device according to claim 1, **characterised in that** the receiver (70) has a first receiving surface (75) and a second receiving surface (85).

5. Device according to any one of claims 1 to 4, **characterised in that** the light dispersed at the first boundary surface (45) and the light dispersed at the second boundary surface (55) are substantially incident on different receiving surfaces (75, 85).

6. Device according to any one of claims 1 to 5, **characterised in that** the receiver (70) has a reference signal output connected with an inverting input of an operational amplifier (110) and a measurement signal output connected with a non-inverting input (105) of the operational amplifier (110).

7. Device according to claim 6, **characterised in that** a controllable voltage divider (96) is provided between the inverting input (100) and the reference signal output.

8. Device according to any one of claims 1 to 7, **characterised in that** a control apparatus (130) for activating the light source (20) and the voltage divider (96) is provided and the control apparatus (130) has an output (140) for issuing a signal for the degree of contamination.

9. Method for detection of contaminations on a transparent surface, which has a first boundary surface (45) and a second boundary surface (55), with a light source (10), by which a light beam (20) is emitted and the light beam (20) is conducted initially to first boundary surface (45), a part of the light dispersed at the second boundary surface (55) is conducted to a receiver (70) and a measurement signal is generated, **characterised in that** the first boundary surface (45) is so arranged that a part of the incident light beam (20), is diffusely dispersed and wherein the optical axis of the light beam (20) is so selected that in the case of direct reflection of the light beam (20) at the boundary surfaces (45, 55) the reflected proportion (47, 92) is not directly incident on the receiver (70), and a part of the light dispersed at the first boundary surface (45) is conducted to the receiver (70) and a reference signal is produced, and a measure for the contamination of the second boundary surface (55) is formed from comparison of the reference signal and the measurement signal.

10. Method according to claim 9, **characterised in that** substantially only the dispersed light proportions (47, 90) of the two boundary surfaces (45, 55) are conducted to the receiver (70).

11. Method according to claim 9 or claim 19, **characterised in that** a contamination is recognised insofar as the measurement signal is greater than the reference signal.

12. Method according to any one of claims 9 to 11, **characterised in that** the comparison of the reference signal with the measurement signal is carried out by a control apparatus (130) at intervals in time and the result of the comparison is passed on wirelessly or by wire to host apparatus.

13. Method according to claim 12, **characterised in that** the control apparatus (130) is supplied by the energy of a solar cell and in the case of contamination a signal is made available by the control apparatus (130) by means of an open-collector circuit.

14. Use of the device or the method for detection of contaminations at surfaces of solar collectors and/or solar cells and/or window panes.

## Revendications

1. Dispositif pour la détection d'impuretés, comprenant:
- une source de lumière (10), qui émet un faisceau lumineux (30);
- une vitre transparente avec une première surface de séparation (45) et une deuxième surface de séparation (55), dans lequel
- le faisceau lumineux (50) émis par la source de lumière (10) atteint d'abord la première surface de séparation (45),
- une partie d'une fraction (92) du faisceau lumineux (20) dispersée sur la deuxième surface de séparation (55) atteint un récepteur (70) et produit un signal de mesure,
**caractérisé en ce que**
- la première surface de séparation (45) est conçue pour disperser de façon diffuse une partie du faisceau lumineux incident (20), et
- la partie du faisceau lumineux (20) dispersée sur la première surface de séparation (45) qui atteint le récepteur (70) produit un signal de référence, et dans lequel
- l'axe optique du faisceau lumineux (20) est choisi de telle manière que, dans le cas d'une réflexion directe du faisceau lumineux (20) sur les surfaces de séparation (45, 55), la fraction réfléchie (47, 92) n'atteigne pas directement le récepteur (70), et
- le dispositif est conçu pour déterminer, à partir de la comparaison du signal de référence avec le signal de mesure, une mesure de l'impureté (90) de la deuxième surface de séparation (55).

2. Dispositif selon la revendication 1, **caractérisé en ce que** la surface de la première surface de séparation (45) est dépolie.

3. Dispositif selon la revendication 1 ou 2, **caractérisé en ce qu'**un film de dispersion est disposé sur la première surface de séparation (45).

4. Dispositif selon la revendication 1, **caractérisé en ce que** le récepteur (70) présente une première face de réception (75) et une deuxième face de réception (85).

5. Dispositif selon l'une quelconque des revendications 1 à 4, **caractérisé en ce que** la lumière dispersée sur la première surface de séparation (45) et la lumière dispersée sur la deuxième surface de séparation (55) atteignent essentiellement des faces de réception différentes (75, 85).

6. Dispositif selon l'une quelconque des revendications 1 à 5, **caractérisé en ce que** le récepteur (70) présente une sortie du signal de référence connectée à une entrée inversante d'un amplificateur opérationnel (110) et une sortie du signal de mesure connectée à une entrée non inversante (105) de l'amplificateur opérationnel (110).

7. Dispositif selon la revendication 6, **caractérisé en ce qu'**il est prévu un régulateur de tension réglable (96) entre l'entrée inversante (100) et la sortie du signal de référence.

8. Dispositif selon l'une quelconque des revendications 1 à 7, **caractérisé en ce qu'**il est prévu un appareil de commande (130) pour la commande de la source de lumière (20) et du régulateur de tension (96), et l'appareil de commande (130) présente une sortie (140) pour l'émission d'un signal indiquant le degré d'encrassement.

9. Procédé pour la détection d'impuretés sur une vitre transparente, qui présente une première surface de séparation (45) et une deuxième surface de séparation (55),
- avec une source de lumière (10), par laquelle on émet un faisceau lumineux (20) et on conduit le faisceau lumineux (20) d'abord sur la première surface de séparation (45),
- on conduit une partie de la lumière dispersée sur la deuxième surface de séparation (55) à un récepteur (70) et on produit un signal de mesure,
**caractérisé en ce que**
- la première surface de séparation (45) est conçue pour disperser de façon diffuse une partie du faisceau lumineux incident (20), et dans lequel
- on choisit l'axe optique du faisceau lumineux (20) de telle manière que, dans le cas d'une réflexion directe du faisceau lumineux (20) sur les surfaces de séparation (45, 55), la fraction réfléchie (47, 92) n'atteigne pas directement le récepteur (70), et
- on conduit une partie de la lumière dispersée sur la première surface de séparation (45) au récepteur (70) et on produit un signal de référence, et
- à partir de la comparaison du signal de référence avec le signal de mesure, on forme une mesure de l'impureté de la deuxième surface de séparation (55).

10. Procédé selon la revendication 9, **caractérisé en ce que** l'on ne conduit au récepteur (70) essentiellement que les fractions de lumière dispersées (47, 90) des deux surfaces de séparation (45, 55).

11. Procédé selon la revendication 9 ou la revendication 10, **caractérisé en ce que** l'on identifie un encrassement dans la mesure où le signal de mesure est plus élevé que le signal de référence.

12. Procédé selon l'une quelconque des revendications 9 à 11, **caractérisé en ce que** l'on effectue la comparaison du signal de référence avec le signal de mesure avec un appareil de commande (130) à des intervalles de temps et on retransmet le résultat de la comparaison sans fil ou par fil à un appareil hôte.

13. Procédé selon la revendication 12, **caractérisé en ce que** l'on alimente l'appareil de commande (130) en énergie à partir d'une cellule solaire et l'on dispose à partir de l'appareil de commande (130), en cas d'encrassement, d'un signal produit au moyen d'un circuit à collecteur ouvert.

14. Utilisation du dispositif ou du procédé pour la détection d'impuretés sur des surfaces de collecteurs solaires et/ou de cellules solaires et/ou de vitres de fenêtres.
